Europäisches Patentamt

European Patent Office

Office européen des brevets

(19)

(11) Veröffentlichungsnummer: **0 204 020**
**B1**

(12) **EUROPÄISCHE PATENTSCHRIFT**

(45) Veröffentlichungstag der Patentschrift: **24.10.90**

(51) Int. Cl.⁵: **G 05 B 19/417**

(21) Anmeldenummer: **85107008.6**

(22) Anmeldetag: **05.06.85**

(54) Verfahren zum rechnergesteuerten Herstellen von Fertigungsunterlagen für Fertigteile.

(43) Veröffentlichungstag der Anmeldung:
**10.12.86 Patentblatt 86/50**

(45) Bekanntmachung des Hinweises auf
die Patenterteilung:
**24.10.90 Patentblatt 90/43**

(84) Benannte Vertragsstaaten:
**AT BE CH DE FR GB IT LI LU NL SE**

(56) Entgegenhaltungen:
EP-A-0 074 659
EP-A-0 129 091
DE-A-2 119 262
GB-A-2 140 937

"Design Document Generation from
Engeneering Databases" von Fumio Nakamura
u.a., COMPUTER GRAPHICS, Springer-Verlag
Tokyo 1983, Seiten 212-221

"Computer-aided Design, Analysis,
Manufacturing and Testing Techniques as
applied to Plastic Part and Mold Development"
von R. Rus Rodgers, COMPUTER GRAPHICS,
Seiten 137-143

(73) Patentinhaber: **Hingst, Jürgen-Peter, Dipl.-Ing.**
**Riedwinkel 10**
**D-8132 Tutzing (DE)**

(72) Erfinder: **Hingst, Jürgen-Peter, Dipl.-Ing.**
**Riedwinkel 10**
**D-8132 Tutzing (DE)**

(56) Entgegenhaltungen:

"Computer Verification of Machine Control
Data", Lawrence O. Ward, Proceedings of 17th
Numerical Control Society Annual Meeting &
Technical Conference, April 27-30, 1980, Seiten
299-320

Courier Press, Leamington Spa, England.

**Beschreibung**

Die Erfindung bezieht sich auf ein Verfahren zum rechnergesteuerten Herstellen von Fertigungsunterlagen gemäß dem Oberbegriff des Patentanspruchs.

Die Herstellung von Fertigungsunterlagen für die industrielle Produktion von Fertigteilen, z.B. Teile einer Kunststoffverarbeitungsmaschine, beginnt generell damit, daß ein Konstruktionsentwurf in eine Detailzeichnung umgesetzt wird, in welcher alle Einzelheiten des Fertigteils festgelegt sind. Auch bei dem sogenannten "Computer-Aided-Design" (abgekürzt "CAD" genannt) wird - lediglich mit Unterstützung einer Recheneinrichtung - zunächst eine Detailzeichnung des Fertigteils erstellt.

Die manuell oder rechnergestützt erstellte Detailzeichnung wird anschließend in einen Arbeitsplan umgesetzt, welcher die notwendigen Fertigungsschritte tabellarisch beschreibt. Im Falle des Einsatzes numerisch gesteuerter Produktiionseinrichtungen werden aus dem Arbeitsplan und der Detailzeichnung Steuerprogramme (z.B. NC-Programme) für die betreffenden Produktionseinrichtungen erstellt. Die Detailzeichnung und der Arbeitsplan bilden zusammen mit den NC-Programmen und weiterer Betriebsmittellisten die Fertigungsunterlagen.

Der Hauptnachteil dieses typischen, herkömmlichen Bearbeitungsablaufs besteht darin, daß im allgemeinen bei Erstellung der Detailzeichnung fertigungsspezifische Belange nicht ausreichend berücksichtigt werden. Wenn beispielsweise in einem NC-Bohrwerk nur Bohrwerkzeuge mit 3,0 sowie 5,0 und 10,0 mm Durchmesser im Werkzeugmagazin vorhanden sind, so läßt sich die Bemessungsangabe "Bohrung 6,0 mm Durchmesser" in der Detailzeichnung ohne Umbau des Werkzeugmagazins nicht fertigen, obwohl auch eine 5,0 mm Bohrung konstruktiv für das Fertigteil ausreichend wäre. Derartige Fehler entstehen dadurch, daß die einzelnen Arbeitsschritte des herkömmlichen Arbeitsablaufs "Entwurf - Detailzeichnung - Arbeitsplan - NC-Programme" in sich abgeschlossen werden, bevor der nächstfolgende Schritt begonnen werden kann. Soll trotzdem den fertigungsspezifischen Belangen Rechnung getragen werden, muß die Detailzeichnung geändert werden was wiederum entsprechende Änderungen sind indessen nicht nur mühsam und umständlich, sondern lassen sich wegen des dafür erforderlichen Zeitaufwandes bei dem häufigen Termindruck in der Fertigung oftmals überhaupt nicht durchführen.

Ein weiterer Nachteil des geschilderten, änderungsfeindlichen Bearbeitungsablaufs besteht darin, daß, eine vergleichende Kostenkalkulation von Entwurfsvarianten meist am Aufwand und an der Dauer scheitert. Der Konstrukteur wird daher in der Praxis gezwungen, die Kosten verschiedener Varianten im Entwurfsstadium, also ohne Anfertigung einer Detailzeichnung, abzuschätzen, was ohne genaue Kenntnis der Details und des dadurch bedingten Fertigungsablaufs vielfach zu Fehleinschätzungen führt.

Zur Verringerung des Aufwandes bei dem geschilderten, herkömmlichen Bearbeitungsablauf ist es bekannt, bei der Herstellung von Detailzeichnungen mittels CAD die in dem CAD-Speicher vorhandenen Geometriedaten unmittelbar für die Erstellung der NC-Programme mitzubenutzen. Ein fertigungsgerechtes Konstruieren ist auch nach diesem bekannten Verfahren nicht zwangsläufig, da nach wie vor die Detailzeichnung Ausgangspunkt für alle folgenden Bearbeitungsschritte ist, mithin die Fehlerursache von in sich fertig abgeschlossenen Arbeitsschritten nicht beseitigt ist.

Es ist bekannt, daß neben den Daten im CAD auch andere Informationen in Rechenanlagen, z.B. in Datenbanken, gespeichert werden können. In sog. relationalen Datenbanken lassen sich detaillierte Informationen über Produktlebensläufe, Wartungshäufigkeiten, Zeichnungsstandards, Kosteninformationen usw. speichern und manuell bzw. durch programme abrufen und verdichten. Die Möglichkeiten, damit die Entwurfsarbeit zu unterstützen und teilweise zu automatisieren beschreibt z.B. "Design Document Generation from Engineering Databases" von Fumio Nakamura u.a., COMPUTER GRAPHICS, Springer-Verlag Tokyo 183, Seiten 212 bis 221.

Grundsätzlich ist auch bekannt, den Bearbeitungsprozeß z.B. bei der Formfüllung eines Werkzeuges zur Produktion von Kunststoffteilen im Spritzgußverfahren, auf einer Rechenanlage abzubilden ("Computer-aided Design, Analysis, Manufacturing and Testing Techniques as applied to Plastic Part and Mold Development" von R. Rus Rodgers, auch im Buch COMPUTER GRAPHICS, Seiten 137 bis 143). Ziel dabei ist es, durch Nachbildung des sonst nicht einsehbaren Formfüllvorganges zum einen die Geometrie des Kunststoffteiles zu optimieren und zum andern die Werkzeugauslegung zu verbessern. Beide genannten Verfahren unterstützen die Entwurfsarbeit mit Rechnerhilfe.

Die Aufgabe der Erfindung besteht dem gegenüber darin, nach Abschluß der Entwurfsarbeit Einzelteile durch Festlegung aller Bearbeitungsschritte zu beschreiben und danach die Fertigungsunterlagen weitgehend automatisiert zu erstellen. Dabei werden fertigungsspezifische Belange zwangsläufig berücksichtigt und damit die Herstellkosten verringert.

Diese Aufgabe wird erfindungsgemäß durch die kennzeichnenden Merkmale des Patentanspruches gelöst.

Bei dem erfindungsgemäßen Verfahren erfolgt eine Umkehrung des bisherigen, typischen Bearbeitungsablaufs dahingehend, daß die Detailzeichnung nicht am Anfang, sondern am Ende des Bearbeitungsablaufs, und zwar zwangsläufig in fertigungsgerechter Form steht. Dabei werden in eine Recheneinrichtung zunächst Entwurfsinformationen, welche Mindestangaben über die Funktion des Fertigteils bezüglich Geometrie und Materialbeschaffenheit umfassen, sowie Rohteilangaben eingegeben. Insoweit besteht eine Ähnlichkeit mit dem bekannten CAD-Verfahren.

Anstatt jedoch aus diesen Informationen unter weiterer Mensch-Maschine-Kommunikation eine Detailzeichnung zu erstellen, geht das erfindungsgemäße Verfahren einen anderen Weg: Aufgrund der Rohteilangaben und der Entwurfsinformationen werden der Recheneinrichtung vom Benutzer die erforderlichen Fertigungsstationen (Bearbeitungsarten) und deren Reihenfolge mitgeteilt, z.B. "erst NC-Bohrwerk, dann NC-Fräsmaschine, zuletzt NC-Drehbank". In der Recheneinrichtung sind die Fertigungsinformationen von jeder einzelnen Fertigungsstation gespeichert, d.h., Maschinen-, Werkzeug- und Spannmitteldaten usw. Nach Maßgabe der eingegebenen sowie der gespeicherten Informationen ergänzt die Recheneinrichtung die Rohteilangaben zwangsläufig hinsichtlich der Erfordernisse einer Detailzeichnung, wobei sich die Detaillierung sowohl nach den Notwendigkeiten der Funktion des Fertigteils als auch nach den Möglichkeiten des vorhandenen Fertigungsparks bestimmt.

Die fertigungsgerechte Detailzeichnung stellt somit eines der Endprodukte des erfindungsgemäßen Verfahrens dar.

Mit der erfindungsgemäß benutzten Recheneinrichtung werden ferner aufgrund der eingegebenen und der gespeicherten Informationen die einzelnen Bearbeitungsschritte innerhalb jeder Fertigungsstation festgelegt, um als weitere Endprodukte des erfindungsgemäßen Verfahrens Arbeitspläne und Betriebsmittellisten in lesbarer Form sowie NC-Programme für die Fertigungsstationen zu erstellen.

Auf diese Weise gelingt es, die für die Fertigung eines Fertigteils erforderlichen Fertigungsunterlagen in zwangsläufig fertigungsgerechter Form sowie in kürzester Zeit weitgehend automatisch zu erstellen, wodurch nicht nur die Fertigungskosten des Fertigteils reduziert werden können, sondern gleichzeitig die Möglichkeit geschaffen wird, die exakten Fertigungskosten verschiedener Entwurfsvarianten zu ermitteln und zu vergleichen, was letztlich zu einer weiteren Senkung der Herstellungskosten des Fertigteils führen kann.

**Patentanspruch**

1. Verfahren zum rechnergesteuerten Herstellen von Fertigungsunterlagen für Fertigteile, wie Detailzeichnungen, Arbeitspläne, Betriebsmittellisten in lesbarer Form und NC-Programme für die Fertigungsstationen eines bestimmten vorhandenen Fertigungsparks, umfassend folgende Merkmale:

a) In der Recheneinrichtung sind die Fertigungsinformationen von jeder einzelnen Fertigungsstation gespeichert, d.h. Maschinen-, Werkzeug- und Spannmitteldaten usw.

b) In die Recheneinrichtung werden Entwurfsinformationen, welche Mindestangaben über die Funktion des Fertigteils bezüglich Geometrie und Materialbeschaffenheit umfassen, sowie Rohteilangaben eingegeben.

c) Aufgrund der Rohteilangaben und der Entwurfsinformationen werden der Recheneinrichtung vom Benutzer die erforderlichen Fertigungsstationen (Bearbeitungsarten) und deren Reihenfolge mitgrteilt.

d) Nach Maßgabe der eingegebenen sowie der gespeicherten Informationen ergänzt die Recheneinrichtung die Rohteilangaben zwangsläufig hinsichtlich der Erfordernisse einer Detailzeichnung, wobei sich die Detaillierung sowohl nach den Notwendigkeiten der Funktion des Fertigteils als auch nach den Möglichkeiten des vorhandenen Fertigungsparks bestimmt.

e) Erstellung der fertigungsgerechten Detailzeichnung, Arbeitspläne, NC-Programme und Betriebsittellisten durch den Rechner aus den unter
(d) gesammelten Daten.

**Revendication**

Méthode destinée à l'établissement assisté par ordinateur de documents de travail pour des produits usinés finis, tels que des plans de détails, des programmes de travail, des listes de moyens et matériels de service présentées dans une forme lisible et des programmes de commandes numériques pour les postes de travail d'un parc de fabrication existant bien déterminé, ladite méthode portant les caractéristiques suivantes:

1. Dans le calculateur sont mémorisées les informations de fabrication de chacun des postes de travail, c'ets-à-dire les données relatives aux machines, les données concernant les outils et les données se rapportant aux matériels d'ablocage, etc.;

2. Dans le calculateur sont introduites des informations relatives à l'avant-projet, à savoir des informations englobant des indications minimales au sujet des la fonction de la pièce usinée finie en ce qui concerne la géométrie et la constitution des matériaux, ainsi que des indication au sujet des pièces brutes;

3. Sur la base des indications relatives aux pièces brutes et des informations concernant l'avant-projet, l'utilisateur communique au calculateur les postes de fabrication nécessaires (modes d'usinage) ainsi que l'ordre dans lequel ceux-ci se succèdent.

4. Sur la base des valeurs introduites ainsi que des informations mémorisées, le calculateur complète obligatoirement les indications concernant les pièces brutes en ce qui concerne les nécessités d'un plan de détails, les détails étant déterminés aussi bien selon les nécessités de la fonction de la pièce usinée finie que d'après les possibilités du parc de fabrication existant.

5. L'établissement du plan de détail conforme à la fabrication, des programmes de travail, des programmes de commande numérique et des listes de moyens et matériels de service par le calculateur, à partir des 4 données collectées, par exemple le diamètre, la longueur et la vitesse de coupe des outillages d'alésage disponibles ainsi que l'établissement des documents de fabrication.

**Claim**

Methods for the computer-controlled production of engineering data for finished parts, such as detail drawings, working plans, special equipment lists in readable form and NC programs for the production stations of specific, existing production machinery, include the following features:

1. The production data for each individual production station is stored in the computer, i.e. machine, tool, and workholding equipment data etc.

2. Design information, which shall include minimum details regarding the function of the finished part in respect of its geometry and material composition, as well as unmachined part data, shall be fed into the computer,

3. Based on the unmachined part data and the design information, the operator will tell the computer what production stations are required (methods of machining) and their sequence.

4. According to the values entered and the information stored, the computer will supplement the unmachined parts data in respect of the requirements of the detail drawing and the details will be determined both according to the requirements of the function of the finished part and the facilities of the existing production machinery,

5. Preparation of the required detail drawing, working plans, NC programs and lists of special tools by the computer from the data collected under 4, for example, diameter, length and cutting speed of the available drilling tools, as well as providing the production data.